# FASCICULE DE BREVET EUROPEEN

(11) **EP 3 040 163 B1**
(45) Date de publication et mention de la délivrance du brevet: **20.09.2017**
(21) Numéro de dépôt: 15202130.9
(22) Date de dépôt: 22.12.2015
(51) Int. Cl.: B25B 23/142, B25B 23/145, B25B 23/147, G01L 5/26, G01L 5/24, B25B 23/14, G01L 5/00, F16B 31/02, B23P 19/06

(54) **PROCEDE DE CONTROLE D'UNE EMPRISE DE FILETS COMPLETS LORS D'UN SERRAGE D'UN ASSEMBLAGE**
VERFAHREN ZUR KONTROLLE EINER FLÄCHE VON KOMPLETTEN GEWINDEN BEIM FESTZIEHEN EINER VERBINDUNG
METHOD OF VERIFYING THE ENGAGEMENT OF COMPLETE THREADS ON TIGHTENING AN ASSEMBLY

(30) Priorité: 23.12.2014 FR 1463258; 18.03.2015 FR 1552240
(43) Date de publication de la demande: 06.07.2016
(73) Titulaire: Airbus Operations, 31060 Toulouse (FR)
(72) Inventeur: MORGUE, Patricia, 31770 COLOMIERS (FR); PAREDES, Manuel, 31130 BALMA (FR); GOURDON, Sophie, 31700 BLAGNAC (FR); DOLS, Simon, 31000 TOULOUSE (FR)
(74) Mandataire: Santarelli

(56) Documents cités:
- FR-A1- 2 813 390
- FR-A1- 3 000 197
- US-A- 4 102 182
- US-A- 4 685 050
- US-A- 4 941 358
- US-A- 5 396 703

## Description

La présente demande concerne un procédé de contrôle automatique de fixation pendant installation, en particulier de fixation filetée, et plus précisément un procédé de contrôle d'une emprise de filets complets lors d'un serrage d'un assemblage.

Les contrôles habituellement réalisés sont souvent insuffisants pour s'assurer de la qualité d'un assemblage.

On connait par exemple la demande de brevet français déposée sous le n°1262503 qui décrit un procédé de contrôle d'un accostage. Il s'agit alors de détecter des variations de pentes traduisant la mise en contact de l'élément de fixation avec les pièces à assembler, une éventuelle phase intermédiaire traduisant la présence éventuelle d'un jeu préalable entre les pièces à assembler puis le serrage. Il est alors possible de considérer que si la phase intermédiaire n'est pas détectée, alors que par exemple la pente de la phase de serrage est correcte, l'accostage est correct ; mais si cette phase intermédiaire est détectée, elle est représentative d'un jeu existant entre les éléments à assembler ; l'assemblage étant alors correct si la pente de serrage est conforme aux attentes, sinon, un problème lié à l'accostage est détecté.

La vérification de l'existence de ces différentes phases permet de mieux assurer que lorsque la pente surveillée est conforme aux attentes, celle-ci correspond effectivement au serrage à proprement parlé et ne serait pas un artéfact lié à un problème d'assemblage des pièces entre elles.

Dans le cadre de fixations filetées, comme par exemple un boulon, c'est-à-dire une vis avec un écrou, il est aussi préférable de pouvoir s'assurer que le serrage est effectué dans des filets de la vis correctement formés, c'est-à-dire en dehors de régions de filets incomplets ou imparfaits pouvant se situer aux deux extrémités de la zone filetée de la tige de la vis, et qu'il n'y a pas de contact entre l'écrou et une zone de transition de la vis, c'est-à-dire la zone définie sur la fin du filetage, avant la partie lisse située entre le filetage et la tête de la vis.

En outre, il est avantageux de pouvoir réaliser le contrôle en temps réel en évitant au mieux une intervention supplémentaire de la part d'un opérateur.

Actuellement, un procédé de contrôle comporte une utilisation de cales qui permettent à l'opérateur de contrôler des paramètres géométriques traduisant la bonne installation des fixations. Pour cela, l'opérateur place une cale au contact du boulon, si les critères géométriques correspondant aux conditions prescrites sont respectés, la cale ne touchera pas les éléments à contrôler. Toutefois, si des rondelles sont utilisées il arrive que leur diamètre soit insuffisant pour que l'opérateur y place une cale. Ceci implique de devoir démonter l'assemblage afin de remplacer la rondelle même si l'assemblage était conforme. De plus l'opérateur a généralement besoin d'avoir sur lui un jeu de cales correspondant à tous les diamètres qu'il doit serrer et, souvent, en fonction des différents standards. Pour éviter un jeu de cales par standard il est possible de définir un jeu de cale général mais ceci est plus restrictif et donc refuse plus d'installations correctes ce qui, par conséquent, nécessite plus de démontages. Les documents suivants représentent d'autres exemples de l'état de l'art dans le domaine des procédés de contrôle de serrage d'un assemblage: US4102182 A, US5396703 A, US4941358 A, FR3000197 A1, US4685 050 A. La présente invention vise à proposer un procédé de contrôle amélioré menant en outre à d'autres avantages.

A cet effet, est proposé, selon un premier aspect, un procédé de contrôle d'une emprise de filets complets lors d'un serrage d'un assemblage comportant au moins une première pièce et une deuxième pièce et une fixation filetée, formée d'un premier élément et d'un deuxième élément, le procédé comportant au moins les étapes suivantes :
- une étape de mesure d'au moins un couple parmi un couple de serrage et un couple de réaction dans la fixation filetée en maintenant immobile l'un des éléments de la fixation fileté,
- une étape de mesure d'un autre paramètre, différent du couple, de préférence un temps, un déplacement axial ou encore un angle de rotation entre le premier et le deuxième élément,

- une étape de détermination d'une fonction représentant une évolution du couple par rapport à l'autre paramètre pour des valeurs de couple entre 0 et une valeur finale de couple,
- une étape d'analyse de la fonction comportant :
   - Une étape d'identification de portions de la fonction, lesdites portions formant ensemble la fonction, et de leur valeur de pente respective,
   - une étape de comparaison de la valeur de pente de chaque portion de fonction avec chacune des valeurs de pentes, préalablement déterminées, d'une première fonction théorique et/ou expérimentale de référence caractéristique d'une installation correcte sans défauts et avec chacune des valeurs de pentes, préalablement déterminées, d'une deuxième fonction théorique et/ou expérimentale de référence caractéristique d'une installation incorrecte avec serrage sur des filets imparfaits, et
- une étape de vérification, comportant :
   - une vérification que la valeur de pente d'une portion de fonction est nulle, cette portion de fonction formant un plateau non nul sur des valeurs de l'autre paramètre,
   - une vérification que la valeur de pente d'une dernière portion de fonction, définie après la portion formant plateau pour des couples au moins égaux au couple de la portion formant plateau, est égale à une valeur de pente caractéristique d'une installation correcte,
   - une vérification qu'aucune des valeurs des pentes de portions de fonction définies après la portion formant plateau est égale à une valeur de pente de la deuxième fonction de référence correspondant à un serrage sur des filets imparfaits, et
si au moins l'une des vérifications de l'étape de vérification n'est pas validée, le procédé comporte une étape d'information que le serrage est effectué de manière incorrecte.

On entend ici par le fait qu'une vérification est validée que les critères vérifiés sont remplis.

Comme mentionné précédemment, les filets complets de la vis correspondent ici aux filets supposés correctement formés, c'est-à-dire en dehors de régions de filets incomplets ou imparfaits pouvant se situer aux deux extrémités de la zone filetée de la tige de la vis ; une vis comportant généralement une zone de transition, c'est-à-dire la zone définie sur la fin du filetage, avant la partie lisse située entre le filetage et la tête de la vis.

Ainsi, le procédé comporte une étape de comparaison de la valeur de pente de chaque portion de la fonction considérée avec chacune des valeurs de pentes, préalablement déterminées, d'une première fonction théorique et/ou expérimentale de référence caractéristique d'une installation correcte sans défauts, d'une part, et, d'autre part, avec chacune des valeurs de pentes, préalablement déterminées, d'une deuxième fonction théorique et/ou expérimentale de référence caractéristique d'une installation incorrecte avec serrage sur des filets imparfaits.

Autrement dit, sont préalablement déterminées au moins deux fonctions différentes : l'une caractéristique d'une installation correcte, l'autre caractéristique d'une installation incorrecte.

Un tel procédé permet ainsi de non seulement vérifier si le serrage est correct mais aussi qu'il est effectivement réalisé sur les filets complets de la fixation filetée. Le procédé permet ainsi un contrôle en temps réel lors du serrage et permet donc d'éviter une étape de contrôle après pose, ce qui entraine un possible gain de temps. De plus l'opérateur n'a plus besoin d'avoir sur lui un jeu de cales correspondant à tous les diamètres qu'il doit serrer. Une intervention supplémentaire de la part de l'opérateur est ainsi également évitée.

Selon un exemple de mise en oeuvre, l'étape de vérification comporte une vérification d'une existence d'une première portion de fonction, cette première portion de fonction étant préalable à la portion de fonction formant le plateau, et une vérification que la première portion de fonction comporte une pente positive, c'est-à-dire non nulle.

Selon un exemple de mise en oeuvre, l'étape d'identification de portions de la fonction comporte les étapes suivantes :
- une étape de détermination d'un premier point d'inflexion correspondant à une valeur de couple initial - c'est-à-dire la valeur de couple à partir de laquelle la mesure est initiée, à savoir 0 ou toute autre valeur de couple - et d'un dernier point d'inflexion correspondant à une valeur de couple final - c'est-à-dire la valeur de couple à laquelle la mesure est arrêtée,
- une étape de recherche et détermination d'au moins un point d'inflexion intermédiaire, compris en le premier point d'inflexion et le dernier point d'inflexion,
- une étape de définition d'une portion de fonction entre deux points d'inflexion consécutifs,
- une étape d'extrapolation linéaire de chaque portion de fonction,
- une étape de calcul d'une valeur de pente caractérisant chaque extrapolation linéaire de chaque portion de fonction.

Selon un exemple de mise en oeuvre, l'étape de vérification comporte une vérification qu'il y a au maximum deux portions de fonction après la portion formant plateau, et si cette vérification n'est pas validée, le procédé comporte une étape d'information qu'il existe un risque de serrage incorrect. Selon un exemple de mise en oeuvre, le procédé comporte :
- Une étape de mesure du couple de serrage et du couple de réaction,
- Une étape de comparaison du couple de serrage et du couple de réaction avec au moins un cas de référence prédéterminé expérimentalement et/ou théoriquement, et

Si l'étape de comparaison n'est pas validée - c'est-à-dire si le couple de serrage et le couple de réaction diffèrent des valeurs de référence correspondantes du cas de référence au-delà d'une fourchette de tolérance associée, par exemple plus ou moins 10% ou 5% autour de la valeur de référence considérée - le procédé comporte une étape d'alerte que le serrage n'est pas conforme.

Par exemple, il s'agit alors d'un couple excessif qui provient d'un contact entre un écrou et une vis dans la zone de transition, l'étape d'alerte permettant alors de prévenir d'un endommagement de la fixation.

L'objet de la présente demande sera mieux compris et ses avantages apparaîtront mieux à la lecture de la description détaillée qui suit, en référence aux figures annexées dans lesquelles :
Les figures 1 a) et 1b) illustrent les deux extrémités d'un filetage d'une vis,
La figure 2 représente schématiquement un contact entre un écrou et une zone de transition de filetage de la vis,
La figure 3 présente schématiquement une courbe de serrage comportant différentes portions correspondant à différentes phases pouvant apparaitre lors d'un serrage, un contact dans la zone de transition intervenant après un serrage effectif,
La figure 4 présente schématiquement une courbe de serrage comportant différentes portions correspondant à différentes phases pouvant apparaitre lors d'un serrage dans quel cas un contact dans la zone de transition intervient avant un serrage effectif une fois qu'un jeu entre les plaques est comblé,
La figure 5 illustre un premier cas de serrage dans lequel un contact dans la zone de transition intervient avant un serrage effectif, sans jeu,
La figure 6 illustre un deuxième cas de serrage, dans lequel un contact dans la zone de transition intervient sans que le serrage effectif n'ait été réalisé,
La figure 7 montre une comparaison entre une fonction représentant un couple de réaction mesuré dans la vis (en pointillés) et une fonction représentant la courbe de serrage correspondant au cas de la figure 3 (en trait continu), et
La figure 8 présente schématiquement une courbe de serrage comportant différentes portions correspondant à différentes phases pouvant apparaitre lors d'un serrage dans quel cas apparait une plastification de l'assemblage.

Dans le cadre de fixations filetées, comme par exemple un boulon, c'est-à-dire une vis avec un écrou, il est avantageux de pouvoir s'assurer que le serrage est effectué dans des filets de la vis correctement formés, c'est-à-dire en dehors de régions de filets incomplets ou imparfaits pouvant se situer aux deux extrémités de la zone filetée de la tige de la vis, et qu'il n'y a pas de contact entre l'écrou et une zone de transition de la vis, c'est-à-dire la zone définie sur la fin du filetage, avant la partie lisse située entre le filetage et la tête de la vis. En d'autres termes, il est préférable que 1) seuls les filets complets soient en prise avec l'écrou et que 2) il n'y ait pas de contact entre l'écrou et la zone de transition de la vis. Ceci permet de garantir les performances de l'assemblage. En effet, les filets peuvent être incomplets ou imparfaits aux deux extrémités de la zone filetée.

La première condition permet ainsi de vérifier le freinage de l'écrou (sa résistance au desserrage). En effet, afin de mieux permettre le freinage de l'écrou, celui-ci est possiblement légèrement déformé lors de la fabrication. La friction supplémentaire exercée par cette déformation au contact des filets de la vis prévient l'écrou d'un desserrage prématuré. Si le filet en face de l'écrou n'est pas complet, la friction exercée est moindre. Il peut donc y avoir un risque de desserrage sous vibration. Pour que le freinage soit le plus efficace possible, la surface de contact entre les filets doit être la plus importante possible, d'où cette première condition. Cela se traduit par la création d'un couple, le couple de freinage, que l'opérateur doit ajouter en plus du couple de serrage utile. Ce couple augmente au cours du serrage, au fur et à mesure que de nouveaux filets parfaitement formés sont engagés, jusqu'à une valeur seuil lorsque tous les filets de l'écrou sont en prises avec des filets parfaits. Cet aspect peut être vérifié de façon visuelle lors de l'assemblage, lorsque le premier filet de la vis débouche hors de l'écrou.

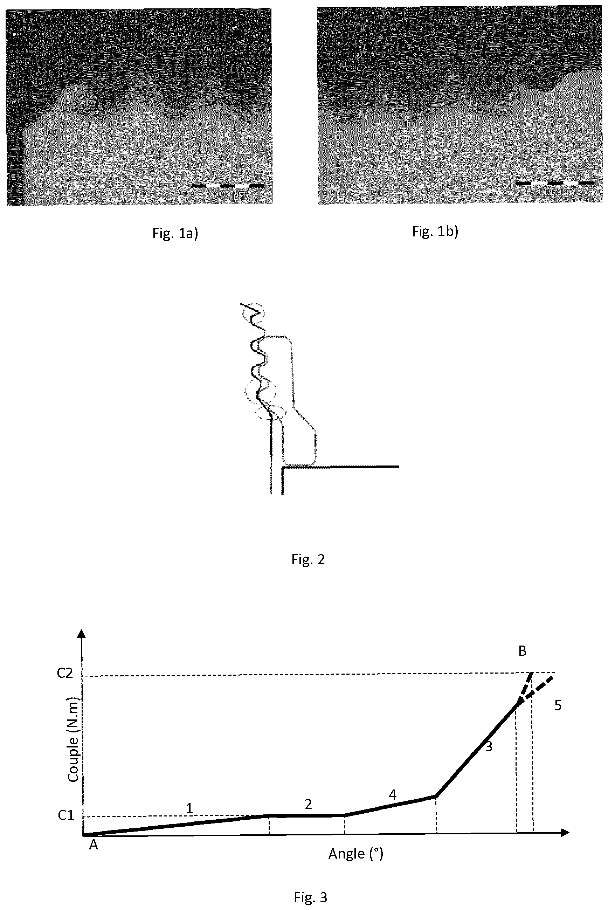

De plus, dans le bout du filetage (vers la tête de la vis, représenté figure 1b)) le fond des filets imparfaits est moins profond que pour le reste du filetage. Ainsi, si le serrage se poursuit dans cette zone, les filets de l'écrou vont entrer en contact avec le fond de filets de la vis et se déformer, comme ceci est par exemple illustré par la figure 2. Ces filets correspondent à la zone de transition de la vis, qui est comprise entre la partie correctement filetée et la partie lisse de la tige de la vis. Si l'écrou n'est pas correctement sélectionné, il y a un risque que la zone de transition de la vis entre en contact avec l'écrou.

Ces différentes phases se traduisent, par exemple visuellement sur une courbe représentant une évolution du couple, par exemple le couple de serrage, en fonction d'un autre paramètre de serrage, comme par exemple l'angle, le temps, un déplacement ou une déformation.

Une telle courbe est illustrée sur la figure 3 sur laquelle est représenté le couple de serrage (en ordonnée), en fonction de l'angle (en abscisse). Dans la présente description, pour illustrer le procédé objet de la présente demande, la relation couple de serrage/angle est utilisée, mais cette description reste valable pour tout autre duo mesurable, qu'il s'agisse du couple de serrage ou d'un couple de réaction dans la fixation filetée en maintenant immobile l'un des éléments de la fixation fileté : couple/temps, couple/déplacement ou autre.

La courbe de la figure 3 comporte ici cinq portions, numérotées de 1 à 5, qui représentent les phases suivantes :
La première portion, ou portion 1, est la portion partant d'un premier point d'inflexion A, formé par le point de coordonnées (0, 0), c'est-à-dire l'origine de la courbe. Sur cette portion, le couple croit jusqu'à atteindre une valeur C1 qui correspond à un couple de freinage. Cette portion 1 représente un freinage de l'écrou lorsque celui-ci est enfilé sur la vis, jusqu'à ce que tous les filets de l'écrou soient en prise avec des filets complets de la vis.
La deuxième portion, ou portion 2, est la portion représentant un plateau. Ce plateau s'étend pour différentes valeurs d'abscisses, ici d'angle, pour une valeur sensiblement constante de couple valant le couple de freinage C1. La deuxième portion qui forme un plateau apparait après la portion 1. Cette portion correspond à une emprise des filets de l'écrou sur les filets complets de la vis, avant que le serrage de l'assemblage, représenté par la portion 3, ne s'amorce. La présence d'un plateau permet de s'assurer que le freinage a atteint sa valeur nominale et donc, que les premiers filets imparfaits ont débouché hors de l'écrou. En effet pour que la valeur de freinage soit atteinte, il faut que tous les filets en prise dans la partie freinée soient correctement formés.
La troisième portion, ou portion 3, est située après la portion 2, voire après la portion 4 si une portion 4 existe. La portion 3 est la portion représentant le serrage effectif.
La quatrième portion, ou portion 4, si elle existe, est située entre la portion 2 et la portion 3. Elle est la portion représentant un éventuel rattrapage de jeu entre les pièces à assembler. Ainsi, en l'absence de jeu entre les pièces à assembler par exemple, la portion 4 ne figure pas sur la courbe de serrage correspondant à l'assemblage considéré.
La cinquième portion, ou portion 5, si elle existe, est par exemple (comme c'est le cas ici) la dernière portion de courbe, c'est-à-dire la portion s'étendant jusqu'à un point B de couple C2 qui représente une valeur de couple final, un couple cible. Sur la figure 3, elle est située après la portion 3, mais cette portion n'est pas subordonnée aux portions précédentes. Elle représente ici un serrage lors d'un contact entre l'écrou et la vis sur des filets imparfaits de la vis, en particulier sur la zone de transition, soit un sur-serrage.

L'allure de la fonction n'est pas connue à l'avance, celle-ci dépendant de la raideur globale de l'assemblage (pente correspondant au serrage).

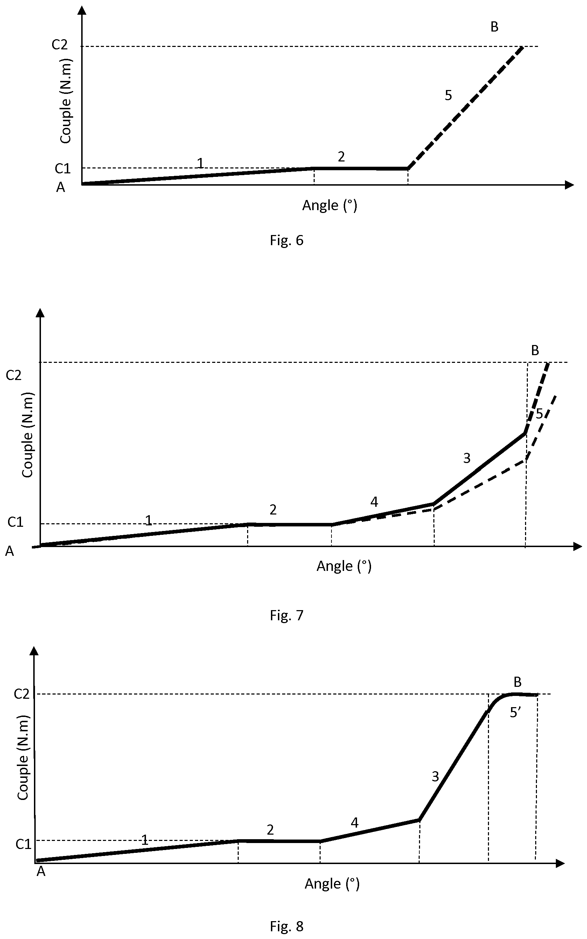

Comme le montre la figure 8, il peut apparaitre que la cinquième portion ne présente pas une pente plus raide que le serrage mais au contraire une chute de pente, voire une asymptote horizontale. Dans ce cas, la cinquième portion, désignée alors 5', traduit une plastification de l'assemblage, ce qui est également à éviter pour une fixation correcte.

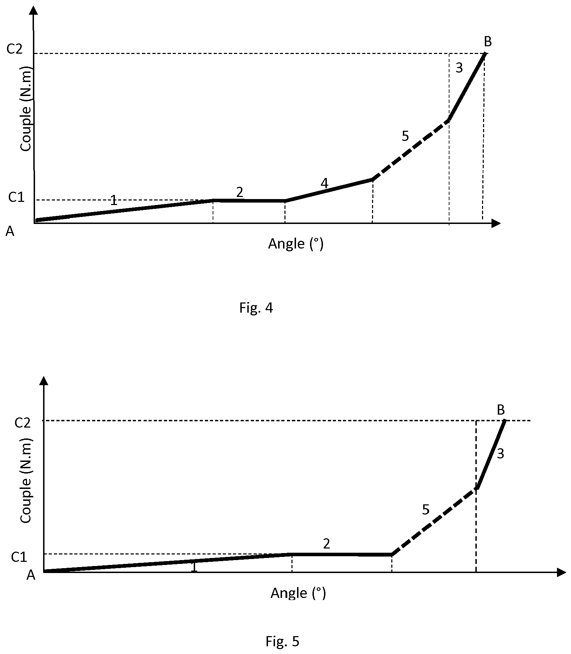

Selon un autre exemple représenté par exemple sur les figures 4 et 5, il est aussi possible que la portion 5 apparaisse avant la portion 3, par exemple entre les portions 4 et 3, ou 2 et 3 dans un cas sans jeu.

Afin de vérifier au moins les conditions précitées lors de la réalisation d'un assemblage, un procédé de contrôle comporte par exemple les étapes suivantes :
- une étape de mesure d'un couple, par exemple ici le couple de serrage, mais il pourrait bien entendu s'agir du couple de réaction dans la fixation filetée,
- une étape de mesure d'un autre paramètre, différent du couple, de préférence un temps, un déplacement axial ou encore un angle de rotation entre le premier et le deuxième élément,
- une étape de détermination d'une fonction représentant une évolution du couple par rapport à l'autre paramètre pour toute valeur de couple entre une valeur initiale, qui peut être 0 dans un cas particulier où les mesures sont réalisées dès le tout début de l'assemble, et une valeur finale de couple, à laquelle la mesure est arrêtée,
- une étape d'analyse de la fonction comportant :
   - Une étape d'identification de portions de la fonction, l'ensemble des portions formant la fonction, et de leur valeur de pente respective,
   - une étape de comparaison de la valeur de pente de chaque portion de fonction avec chacune des valeurs de pentes d'une première fonction théorique et/ou expérimentale de référence préalablement déterminées et caractéristique d'une installation correcte sans défauts et avec chacune des valeurs de pentes d'une deuxième fonction théorique et/ou expérimentale de référence préalablement déterminées caractéristique d'une installation incorrecte avec serrage sur les filets imparfaits,
- une étape de vérification, comportant :
   - optionnellement, selon le couple à partir duquel les mesures commencent à être réalisées, une vérification de la présence possible d'une portion de fonction ayant une pente positive, non nulle, qui se situerait alors avant une portion formant plateau ; cette portion correspondant dans ce cas à la première portion précitée,
   - une vérification que la valeur de pente d'une portion de fonction est nulle, cette portion de fonction formant un plateau non nul sur des valeurs de l'autre paramètre, vérifiant que cette portion correspond au freinage de l'écrou sur filets complets de la vis, c'est-à-dire à la portion 2 précitée,
   - une vérification que la valeur de pente d'une portion de fonction, définie entre après la portion de fonction formant plateau et le couple final pour des couples au moins égaux au couple de la portion formant plateau, est égale à une valeur de serrage de la courbe de référence correspondant à un serrage correct, pour vérifier qu'une phase de serrage a effectivement eu lieu, cette portion correspondant alors à la portion 3 précitée,
   - optionnellement, une vérification que la valeur de pente d'une éventuelle portion de fonction définie entre la portion de fonction formant plateau (la portion 2) et la portion 3, n'est pas égale à une valeur de serrage de la courbe de référence correspondant à un serrage sur les filets imparfaits, cette portion correspondant alors à la portion 4 précitée, et
   - une vérification que la portion de courbe correspondant à la portion 3 comporte le couple final, pour vérifier que la phase de serrage est bien la dernière phase mise en oeuvre et que, par exemple, une phase de sur-serrage n'intervient pas par la suite.

Si les vérifications de l'étape de vérification sont validées, le procédé comporte une étape de validation que le serrage est effectué correctement sur les filets complets de la fixation filetée.

Ici, vérifier si une pente est égale à une valeur prédéterminée implique de vérifier que la pente est au moins comprise dans une fourchette ou une zone de tolérance autour de cette valeur, par exemple +/-5%. Ceci vaut bien entendu pour toute vérification des valeurs par rapport à des valeurs prédéterminées, théoriquement et/ou expérimentalement.

En utilisant les changements de pentes de la courbe il est ainsi possible de décrire les différents évènements qui ont eu lieu au cours du serrage.

Le procédé permet ainsi un contrôle, c'est-à-dire une détection et une surveillance, de certaines phases correspondant à différentes portions de courbes pour interpréter la fonction afin de connaitre l'état de l'assemblage.

Si les vérifications précitées ne sont pas validées, alors le procédé peut comporter une étape d'information que le serrage n'est pas correct, et de plus, grâce à la comparaison des différentes portions détectées avec des valeurs prédéterminées, il est possible d'identifier une cause du problème. En d'autres termes, en fonction des phases détectées, c'est-à-dire des portions de fonction identifiées, il est alors possible de savoir si l'assemblage est correctement réalisé dans les filets de la fixation filetée ou de pouvoir identifier une cause résultant en un problème d'assemblage.

Le procédé permet ainsi de se focaliser sur le comportement des filets en prise.

L'identification des différentes pentes ainsi que les comparaisons associées se font par exemple au moyen d'un algorithme. Celui-ci peut, par exemple, être directement intégré à un outil de l'appareil de serrage ou à une unité de contrôle ou autre. Ainsi, une réponse sous forme d'un signal, qui peut être lumineux, sonore ou encore digital ou une combinaison de ceux-ci, peut être transmis directement à l'opérateur, lui indiquant si tous les paramètres contrôlés sont valables et donc le serrage correct.

Grâce au procédé, observer les variations de pentes successives et comparer la valeur du coefficient directeur avec une valeur de référence permet d'écarter des cas litigieux.

Un exemple de cas litigieux est donné par la figure 5. La courbe de la figure 5 comporte deux portions au-delà du plateau de la portion 2 (les portions 1 et 2 étant plus facilement identifiables, elles ne sont pas discutées dans le cadre de cet exemple). En comparant les valeurs de pente de ces deux portions à des valeurs théoriques, et/ou expérimentales, il est possible de déterminer que ces deux portions correspondent successivement à une phase de serrage sur la zone de transition puis à une phase de serrage. Sinon, il serait par exemple possible de les confondre avec, respectivement, une phase de rattrape de jeux et une phase de serrage ; dans quel cas il pourrait être conclu que le serrage est correct, alors qu'en réalité, ce cas correspond à un assemblage initialement sans jeu de montage, dans lequel le serrage a été réalisé dans la zone de transition de la vis, et est par conséquent non-conforme.

Un autre exemple de cas litigieux est donné par la figure 6. La courbe de la figure 6 comporte une portion au-delà du plateau de la portion 2 (les portions 1 et 2 restant plus facilement identifiables, elles ne sont pas non plus discutées dans le cadre de cet exemple). Outre le fait qu'il est possible de déterminer que le serrage n'est pas conforme car la pente que cette portion est différente de la valeur de serrage attendue, il est possible de déterminer une raison pour laquelle le serrage n'est pas conforme. Ceci pourrait par exemple être dû soit au fait qu'un jeu n'est pas comblé entre les pièces à assembler avant que le couple cible C2 ne soit atteint, soit parce que le serrage a lieu sur la zone de transition de la vis. En l'occurrence, il s'agit d'un cas où l'écrou entre en contact avec la zone de transition sans avoir touché les pièces à serrer. Il peut par exemple en être déduit que la vis a été mal formée ou mal choisie, sa zone plane entre la partie filetée et la tête étant par exemple trop longue.

De manière générale, si la première portion ou la deuxième portion n'est pas détectée ou qu'elles sont détectées mais que leur pente n'est pas conforme aux attentes, alors le procédé peut comporter une étape d'information indiquant qu'il y a un problème d'assemblage, voire par exemple d'enfilage de la fixation filetée ou qu'un jeu excessif existe entre les éléments à assembler.

Eventuellement, l'étape de vérification comporte préalablement une vérification que la fonction comporte au moins trois portions, le procédé comportant l'étape de validation si cette vérification est validée. En plus ou à la place, l'étape de vérification peut aussi comporter préalablement une vérification que la fonction est monotone et croissante, c'est-à-dire que la pente en tout point est égale ou supérieure à zéro, le procédé comportant l'étape de validation si cette vérification est validée. En effet, si la courbe présente une chute quelconque du couple, cela peut également traduire un problème dans l'assemblage et l'opérateur peut en être averti.

Ainsi, dans le présent procédé, toute la courbe de serrage est exploitée et pas seulement la portion correspondant au serrage effectif de l'assemblage.

Selon un exemple de mise en oeuvre, le procédé comporte une étape de détection d'une première portion de courbe de première pente positive pour toutes valeurs de couple comprises entre 0 et une valeur de couple dite valeur de couple de freinage, non-nulle, cette première portion correspondant au freinage du deuxième élément lors de son enfilage sur le premier élément, une étape de détection d'une deuxième portion de courbe, à la suite de la première portion de courbe, de deuxième pente nulle, formant un plateau non nul sur des valeurs de l'autre paramètre, pour des valeurs de couple égales à la valeur de couple de freinage et une étape de détection d'au moins une troisième portion de courbe, ultérieure à la deuxième portion de courbe, de troisième pente positive égale à une valeur de serrage prédéterminée, pour des valeurs de couple comprises entre une première valeur de couple, au moins égale à la valeur de couple de freinage, et une deuxième une valeur de couple, supérieure à la première valeur de couple. Le procédé comporte alors en outre possiblement une étape de vérification que la première portion a été détectée, une étape de vérification que la deuxième portion a été détectée, une étape de vérification qu'une troisième portion dont la troisième pente est égale à la valeur de serrage prédéterminée a été détectée et une étape de vérification que la deuxième valeur de couple est égale à la valeur cible de couple.

Par exemple, l'étape d'identification de portions de la fonction comporte les étapes suivantes :
- une étape de détermination d'un premier point d'inflexion correspondant à une valeur de couple initial, voire de 0 si les mesures sont réalisées dès le tout début de l'assemblage, et d'un dernier point d'inflexion correspondant à une valeur de couple égale à la valeur finale de couple,
- une étape de recherche et détermination d'au moins un point d'inflexion intermédiaire, compris en le premier point d'inflexion et le dernier point d'inflexion,
- une étape de définition d'une portion de fonction entre deux points d'inflexion consécutifs,
- une étape d'extrapolation linéaire de chaque portion de fonction,
- une étape de calcul d'une valeur de pente caractérisant chaque extrapolation linéaire de chaque portion de fonction.

Selon un exemple de mise en oeuvre, le procédé comporte une étape de calcul de couple de la deuxième portion de fonction, c'est-à-dire de celle formant plateau (qui peut être la première détectée si les mesures ne sont pas réalisée au cours de la phase correspondant à la première portion), une étape de comparaison de la valeur de couple de la deuxième portion avec une valeur de couple de freinage de la fonction théorique prédéterminée et/ou d'une valeur expérimentale de référence, non nulle, et l'étape de vérification comporte en outre une vérification que la valeur de couple de la deuxième portion se situe dans un intervalle autour du couple de freinage de référence. Le procédé comporte alors l'étape de validation précitée si cette vérification est aussi validée. Cette étape permet ainsi de mieux s'assurer que le plateau correspond effectivement au freinage de l'écrou sur filets complets de la vis.

Afin de vérifier s'il existe une « quatrième » portion correspondant effectivement à un rattrapage de jeu entre les pièces à assembler, le procédé peut comporter une étape de vérification qu'une portion, dite quatrième portion, a été définie entre la deuxième portion et la troisième portion, c'est-à-dire entre le plateau et le serrage effectif, et si une quatrième portion a été identifiée entre la deuxième portion et la troisième portion, l'étape de vérification comporte alors une vérification que la pente de la quatrième portion n'est pas égale à une valeur de serrage dans les filets imparfaits et si cette étape de vérification est validée, le procédé comporte une étape d'information que la quatrième portion correspond à un rattrapage de jeu entre au moins la première pièce et la deuxième pièce à assembler.

Un autre problème d'assemblage peut aussi être liée au fait que la phase de serrage peut ne pas avoir lieu. Dans ce cas, la vérification que la valeur de pente de la dernière portion est égale à une valeur de serrage de la fonction de référence prédéterminée est non validée. Il est alors intéressant de pouvoir identifier pourquoi cette phase n'a pas pu avoir lieu. Le cas échéant, il est alors avantageux que l'étape de vérification comporte une vérification que la pente de la dernière portion est égale à la valeur de la pente de référence correspondant au serrage au-delà des filets et si cette étape de vérification est validée, le procédé comporte une étape d'information que le serrage est incorrect et réalisé au-delà des filets.

Ainsi, en fonction des différentes portions de courbes identifiées et de la valeur de leur pente, il est possible de s'assurer que le serrage a été correctement établi, qu'il a bien eu lieu dans les filets de la fixation, ou quelles sont les causes possibles de défaillance.

Pour mettre en oeuvre ce procédé, une possibilité consiste à instrumenter un appareil de serrage qui, au cours du serrage d'une fixation filetée, mesure des paramètres liés au serrage, comme par exemple le couple, l'angle, le temps, un déplacement ou une déformation.

Une option consiste à instrumenter un élément maintenant la vis (immobilisateur, clé ou autre), afin de déterminer le couple de réaction passant dans celle-ci. Ce couple est lié aux interactions entre l'écrou et la vis, il est une représentation directe du freinage et du contact entre l'écrou et la zone de transition de la vis si celui-ci a lieu. La mesure de ce couple donne également une indication concernant le coefficient de frottements dans le filetage. De façon analogue ce couple de réaction peut être comparé avec une valeur de référence. Ceci est par exemple représenté sur la figure 7 par la ligne en pointillé.

## Revendications

1. Procédé de contrôle d'une emprise de filets complets lors d'un serrage d'un assemblage comportant au moins une première pièce et une deuxième pièce et une fixation filetée, formée d'un premier élément et d'un deuxième élément, le procédé comportant au moins les étapes suivantes :
- une étape de mesure d'au moins un couple parmi un couple de serrage et un couple de réaction dans la fixation filetée en maintenant immobile l'un des éléments de la fixation fileté,
- une étape de mesure d'un autre paramètre, différent du couple, de préférence un temps, un déplacement axial ou encore un angle de rotation entre le premier et le deuxième élément,
- une étape de détermination d'une fonction représentant une évolution du couple par rapport à l'autre paramètre pour des valeurs de couple entre 0 et une valeur finale de couple,
- une étape d'analyse de la fonction comportant :
• Une étape d'identification de portions de la fonction, lesdites portions formant ensemble la fonction, et de leur valeur de pente respective,
• une étape de comparaison de la valeur de pente de chaque portion de fonction avec chacune des valeurs de pentes, préalablement déterminées, d'une première fonction théorique et/ou expérimentale de référence caractéristique d'une installation correcte sans défauts et avec chacune des valeurs de pentes, préalablement déterminées, d'une deuxième fonction théorique et/ou expérimentale de référence caractéristique d'une installation incorrecte avec serrage sur des filets imparfaits, et
- une étape de vérification, comportant :
• une vérification que la valeur de pente d'une portion de fonction (2) est nulle, cette portion de fonction (2) formant un plateau non nul sur des valeurs de l'autre paramètre,
• une vérification que la valeur de pente d'une dernière portion de fonction (3), définie après la portion formant plateau (2) pour des couples au moins égaux au couple de la portion formant plateau (2), est égale à une valeur de pente caractéristique d'une installation correcte,
• une vérification qu'aucune des valeurs des pentes de portions de fonction définies après la portion formant plateau (2) est égale à une valeur de pente de la deuxième fonction de référence correspondant à un serrage sur des filets imparfaits, et
si au moins l'une des vérifications de l'étape de vérification n'est pas validée, le procédé comporte une étape d'information que le serrage est effectué de manière incorrecte.

2. Procédé selon la revendication 1 dans lequel l'étape de vérification comporte une vérification d'une existence d'une première portion de fonction (1), cette première portion de fonction (1) étant préalable à la portion de fonction formant le plateau (2), et une vérification que la première portion de fonction (1) comporte une pente positive.

3. Procédé selon l'une quelconque des revendications 1 ou 2 dans lequel l'étape d'identification de portions de la fonction comporte les étapes suivantes :
• une étape de détermination d'un premier point d'inflexion correspondant à une valeur de couple initial et d'un dernier point d'inflexion correspondant à une valeur de couple final,
• une étape de recherche et détermination d'au moins un point d'inflexion intermédiaire, compris en le premier point d'inflexion et le dernier point d'inflexion,
• une étape de définition d'une portion de fonction entre deux points d'inflexion consécutifs,
• une étape d'extrapolation linéaire de chaque portion de fonction,
• une étape de calcul d'une valeur de pente caractérisant chaque extrapolation linéaire de chaque portion de fonction.

4. Procédé selon l'une quelconque des revendications 1 à 3 dans lequel l'étape de vérification comporte une vérification qu'il y a au maximum deux portions de fonction après la portion formant plateau (2), et si cette vérification n'est pas validée, le procédé comporte une étape d'information qu'il existe un risque de serrage incorrect.

5. Procédé selon l'une quelconque des revendications 1 à 4 comportant :
- Une étape de mesure du couple de serrage et du couple de réaction,
- Une étape de comparaison du couple de serrage et du couple de réaction avec au moins un cas de référence prédéterminé expérimentalement et/ou théoriquement, et
Si l'étape de comparaison n'est pas validée, le procédé comporte une étape d'alerte que le serrage n'est pas conforme.

## Patentansprüche

1. Verfahren zur Kontrolle eines Eingriffs vollständiger Gewindegänge bei einem Anziehen einer Verbindung, die wenigstens ein erstes Teil und ein zweites Teil und eine Gewindebefestigung, die von einem ersten Element und von einem zweiten Element gebildet wird, aufweist, wobei das Verfahren wenigstens die folgenden Schritte umfasst:
- einen Schritt der Messung wenigstens eines Drehmoments von einem Anzugsdrehmoment und einem Reaktionsdrehmoment in der Gewindebefestigung, wobei eines der Elemente der Gewindebefestigung unbewegt gehalten wird,
- einen Schritt der Messung eines anderen, von dem Drehmoment verschiedenen Parameters, vorzugsweise einer Zeit, einer axialen Verlagerung oder auch eines Drehwinkels zwischen dem ersten und dem zweiten Element,
- einen Schritt der Bestimmung einer Funktion, die eine Änderung des Drehmoments in Bezug auf den anderen Parameter für Drehmomentwerte zwischen 0 und einem Endwert des Drehmoments darstellt,
- einen Schritt der Analyse der Funktion, welcher umfasst:
• einen Schritt der Identifizierung von Abschnitten der Funktion, wobei diese Abschnitte zusammen die Funktion bilden, und ihres jeweiligen Anstiegswertes,
• einen Schritt des Vergleichs des Anstiegswertes jedes Funktionsabschnitts mit jedem der im Voraus bestimmten Anstiegswerte einer ersten theoretischen und/oder experimentellen Referenzfunktion, die für eine korrekte, fehlerfreie Montage charakteristisch ist, und mit jedem der im Voraus bestimmten Anstiegswerte einer zweiten theoretischen und/oder experimentellen Referenzfunktion, die für eine inkorrekte Montage mit Anziehen auf unvollkommenen Gewindegängen charakteristisch ist, und
- einen Schritt der Überprüfung, welcher umfasst:
• eine Überprüfung, ob der Anstiegswert eines Funktionsabschnitts (2) null ist, wobei dieser Funktionsabschnitt (2) ein von null verschiedenes Plateau auf Werten des anderen Parameters bildet,
• eine Überprüfung, ob der Anstiegswert eines letzten Funktionsabschnitts (3), der nach dem ein Plateau bildenden Abschnitt (2) für Drehmomente definiert ist, die wenigstens gleich dem Drehmoment des ein Plateau bildenden Abschnitts (2) sind, gleich einem Anstiegswert ist, der für eine korrekte Montage charakteristisch ist,
• eine Überprüfung, ob keiner der Werte der Anstiege von Funktionsabschnitten, die nach dem ein Plateau bildenden Abschnitt (2) definiert sind, gleich einem Anstiegswert der zweiten Referenzfunktion ist, der einem Anziehen auf unvollkommenen Gewindegängen entspricht, und
wobei, falls wenigstens eine der Überprüfungen des Schrittes der Überprüfung nicht mit positivem Ergebnis abgeschlossen wird, das Verfahren einen Schritt der Information umfasst, dass das Anziehen auf inkorrekte Weise durchgeführt wird.

2. Verfahren nach Anspruch 1, wobei der Schritt der Überprüfung eine Überprüfung eines Vorhandenseins eines ersten Funktionsabschnitts (1), wobei dieser erste Funktionsabschnitt (1) dem das Plateau bildenden Funktionsabschnitt (2) vorangeht, und eine Überprüfung, ob der erste Funktionsabschnitt (1) einen positiven Anstieg aufweist, umfasst.

3. Verfahren nach einem der Ansprüche 1 oder 2, wobei der Schritt der Identifizierung von Abschnitten der Funktion die folgenden Schritte umfasst:
• einen Schritt der Bestimmung eines ersten Knickpunktes, der einem anfänglichen Drehmomentwert entspricht, und eines letzten Knickpunktes, der einem endgültigen Drehmomentwert entspricht,
• einen Schritt der Suche und Bestimmung wenigstens eines Zwischen-Knickpunktes, der in dem ersten Knickpunkt und dem letzten Knickpunkt liegt,
• einen Schritt der Definition eines Funktionsabschnitts zwischen zwei aufeinander folgenden Knickpunkten,
• einen Schritt der linearen Extrapolation jedes Funktionsabschnitts,
• einen Schritt der Berechnung eines Anstiegswertes, der jede lineare Extrapolation jedes Funktionsabschnitts charakterisiert.

4. Verfahren nach einem der Ansprüche 1 bis 3, wobei der Schritt der Überprüfung eine Überprüfung umfasst, ob nach dem ein Plateau bildenden Abschnitt (2) maximal zwei Funktionsabschnitte vorhanden sind, und wobei, falls diese Überprüfung nicht mit positivem Ergebnis abgeschlossen wird, das Verfahren einen Schritt der Information umfasst, dass ein Risiko eines inkorrekten Anziehens besteht.

5. Verfahren nach einem der Ansprüche 1 bis 4, welches umfasst:
- einen Schritt der Messung des Anzugsdrehmoments und des Reaktionsdrehmoments,
- einen Schritt des Vergleichs des Anzugsdrehmoments und des Reaktionsdrehmoments mit wenigstens einem experimentell und/oder theoretisch vorbestimmten Referenzfall, und
wobei, falls der Schritt des Vergleichs nicht mit positivem Ergebnis abgeschlossen wird, das Verfahren einen Schritt der Warnung umfasst, dass das Anziehen nicht vorschriftsmäßig erfolgt.

## Claims

1. Process for checking that complete threads are engaged when tightening an assembly comprising at least a first part and a second part and a threaded fastener, comprising a first component and a second component, the process comprising at least the following stages:
- a stage of measuring at least one torque from a coupling torque and a reaction torque in the threaded fastener while keeping one of the components of the threaded fastener fixed,
- a stage of measuring another parameter, other than torque, preferably a time, an axial displacement or again an angle of rotation between the first and second parts,
- a stage of determining a function representing a change in torque in relation to the other parameter for torque values between 0 and the final torque value,
- a stage of analysing the function comprising:
• a stage of identifying the portions of the function, the said portions together making up the function, and their corresponding gradient values,
• a stage of comparing the gradient value for each portion of the function with each of the previously determined gradient values of a first theoretical and/or experimental reference function which is characteristic of correct defect-free assembly and with each of the predetermined gradient values of a second theoretical and/or experimental reference function which is characteristic of incorrect assembly with tightening on incorrectly formed threads, and
- a checking stage comprising:
• checking that the value of the gradient of a portion of the function (2) is zero, this portion of the function (2) forming a non-zero plateau in relation to values of the other parameter,
• checking that the value of the gradient of a last portion of the function (3) defined after the portion forming the plateau (2) for torques which are equal to at least the torque of the portion forming the plateau (2) is equal to a gradient value characteristic of correct assembly,
• checking that none of the values for the gradients of the portions of function defined after a portion forming the plateau (2) is equal to a gradient value of the second reference function corresponding to tightening on incorrectly formed threads, and
if at least one of the checks in the checking stage is not satisfactory the process comprises a stage informing that tightening has not been carried out correctly.

2. Process according to claim 1 in which the checking stage comprises a check that a first portion of the function (1) is present, this first portion of the function (1) preceding the portion of the function forming the plateau (2), and a check that the first portion of the function (1) has a positive gradient.

3. Process according to either of claims 1 and 2, in which the stage of identifying the portions of the function comprises the following stages:
• a stage of determining a first inflexion point corresponding to an initial torque value and a final inflexion point corresponding to a final torque value,
• a stage of seeking and identifying at least one intermediate inflexion point lying in the first inflexion point and the last inflexion point,
• a stage of defining a portion of the function between two consecutive inflexion points,
• a stage of linear extrapolation of each portion of the function,
• a stage of calculating a gradient value characterising each linear extrapolation of each portion of the function.

4. Process according to any one of claims 1 to 3 in which the checking stage comprises a check that there are no more than two portions of the function after the portion forming a plateau (2), and if this check is not satisfactory the process comprises a stage informing that there is a risk that tightening is incorrect.

5. Process according to any one of claims 1 to 4 comprising:
- a stage of measuring the tightening torque and the reaction torque,
- a stage of comparing the tightening torque and the reaction torque with at least one reference situation which has been predetermined experimentally and/or theoretically, and
if the comparison stage is not satisfactory, the process comprises a stage warning that tightening is incorrect.
